Europäisches Patentamt

European Patent Office

Office européen des brevets

(19)

(11) Numéro de publication : **0 477 094 A1**

## (12) DEMANDE DE BREVET EUROPEEN

(21) Numéro de dépôt : **91402479.9**

(22) Date de dépôt : **18.09.91**

(51) Int. Cl.⁵ : **G01S 13/32,** G01S 13/87

(30) Priorité : **18.09.90 FR 9011481**

(43) Date de publication de la demande :
**25.03.92 Bulletin 92/13**

(84) Etats contractants désignés :
**ES FR GB IT**

(71) Demandeur : **SOCIETE NATIONALE D'ETUDE
ET DE CONSTRUCTION DE MOTEURS
D'AVIATION, "S.N.E.C.M.A."
2, boulevard du Général Martial Valin
F-75724 Paris Cédex 15 (FR)**

(72) Inventeur : **Le Garrec, Guy
16, Chemin de la Petite Voie
F-95110 Sannois (FR)**
Inventeur : **Sebilet, Bruno Roger
24, place des Arts
F-92500 Rueil Malmaison (FR)**

(74) Mandataire : **Moinat, François et al
S.N.E.C.M.A. Service des Brevets Boîte
Postale 81
F-91003 Evry Cédex (FR)**

(54) **Dispositif radar à émission continue pour détermination., à courte distance, de la position relative entre un missile et un engin cible sur lequel il est monté.**

(57) Dispositif radar à émission continue pour la détermination, à courte distance, de la position relative entre un missile (10) et un engin cible sur lequel il est monté, comprenant une chaîne d'émission reliée à une antenne d'émission AE pour l'émission d'un signal continu modulé par une séquence pseudo-aléatoire binaire délivrée à une fréquence d'horloge fH et trois chaînes de réception reliées respectivement à trois antennes de réception AR1, AR2, AR3 pour la délivrance de la fréquence d'horloge et son asservissement sur la distance missile-engin cible et des déphasages entre les signaux détectés par les antennes AR1, AR2 et AR1, AR3 ; ces trois paramètres sont transmis à des moyens (34) pour le calcul de la position du missile par rapport à l'engin cible.

EP 0 477 094 A1

FIG. 2

La présente invention a pour objet un dispositif radar à émission continue pour la détermination, à courte distance, de la position relative entre un missile et un engin cible sur lequel il est monté.

La mise au point de systèmes d'armes tels que les missiles nécessite notamment la connaissance la plus complète possible des paramètres caractérisant l'évolution des positions relatives missile-cible dans la phase ultime de l'interception. Pour effectuer ces mesures, des radars à émission continue de faible puissance sont utilisés pour définir la distance minimum de passage du missile par rapport à la cible. Cette information, si elle est suffisante pour les tirs d'entrainement, ne permet pas à elle seule l'évaluation de la position du missile par rapport à la cible dans sa phase finale d'interception. Pour obtenir une définition suffisante de cette évaluation, il est nécessaire de connaître la trajectographie relative du missile par rapport à la cible.

Le brevet français n° 2 561 786 déposé le 23 mars 1984 au nom de la société demanderesse décrit un dispositif permettant d'effectuer cette trajectographie. Ce dispositif est basé sur l'emploi simultané de trois chaînes de réception du type de celle utilisée dans les proximètres à émission continue modulée par une séquence pseudo-aléatoire binaire. On trouve une description de tels proximètres dans le brevet français n° 2 286 391 déposé le 27 septembre 1974 au nom de la société demanderesse.

Dans le dispositif antérieur, on évalue trois sommes de distances, la somme des distances antenne d'émission-missile et missile-première antenne de réception, la somme des distances antenne d'émission-missile et missile-seconde antenne de réception, la somme des distances antenne d'émission-missile et missile-troisième antenne de réception, à partir desquelles on détermine la position relative missile-engin cible.

Le but de la présente invention est aussi de permettre une trajectographie d'un missile par détermination des positions successives du missile par rapport à l'engin cible porteur du radar. Elle permet une précision accrue des mesures pour une dépense énergetique sensiblement équivalente.

L'invention concerne plus précisément un dispositif radar comportant :

– une chaîne d'émission, reliée à une antenne d'émission pour l'émission d'un signal continu modulé par une séquence pseudo-aléatoire binaire délivrée à une fréquence d'horloge fH ;
– une première chaîne de réception, reliée à une première antenne de réception et comprenant des premiers moyens pour la corrélation entre un écho du signal émis avec un signal identique mais retardé d'un temps de retard correspondant au trajet du signal émis entre, d'une part, l'antenne d'émission et le missile et, d'autre part, le missile et la première antenne de réception, ces moyens de corrélation délivrant un premier signal de corrélation sur une entrée d'un générateur commandable en fréquence délivrant un signal à la fréquence d'horloge fH, cette fréquence fH étant représentative de la distance entre le missile et l'engin cible ;
– une seconde chaîne de réception, reliée à une seconde antenne de réception et assurant la détermination d'un déphasage entre la réception dudit écho par les première et seconde antennes de réception ;
– une troisième chaîne de réception, reliée à une troisième antenne de réception et assurant la détermination d'un déphasage entre la réception dudit écho par les première et troisième antennes de réception, et
– des moyens pour calculer, à partir d'une mesure de la fréquence d'horloge fH et des déphasages, la position relative missile-engin cible.

Un signal unique d'émission, modulé par la séquence pseudo-aléatoire, est utilisé pour une mesure de distance par l'intermédiaire de la connaissance de la fréquence d'horloge fH et deux mesures des angles entre l'axe missile-engin cible et l'axe reliant la première antenne de réception à la seconde, d'une part, et à la troisième, d'autre part.

La modulation par une séquence pseudo-aléatoire, équivalente à un codage, permet de protéger les mesures de déphasage des signaux parasites environnants, ce qui est un avantage important de l'invention car on sait que les mesures de déphasage sont très sensibles aux parasites.

Selon un mode de réalisation particulier du dispositif, les seconde et troisième chaînes de réception comprennent chacune :
– des moyens de corrélation entre ledit écho du signal émis avec un signal identique mais retardé dudit temps de retard, ces moyens de corrélation délivrant un signal de corrélation ; et
– des moyens pour la mesure d'un déphasage entre le premier signal de corrélation et le signal de corrélation délivré par les moyens de corrélation.

L'écho du signal émis est donc démodule par les moyens de corrélation avant que soit effectuée chaque mesure de phase.

Dans un mode de réalisation avantageux, l'antenne d'émission est alignée avec les première et seconde antennes de réception selon l'axe longitudinal de l'engin cible, et les première et troisième antennes de réception étant alignées suivant un axe non parallèle à l'axe longitudinal de l'engin cible.

Préférentiellement, d'une part, les première et seconde antennes de réception et, d'autre part, les première et troisième antennes de réception, sont espacées d'une distance au plus égale à une demie longueur d'onde du signal continu.

Cette disposition permet de ne pas avoir d'incertitude sur les mesures de déphasage. En effet, lorsque l'espacement entre deux antennes de réception est supérieur à une demi-longueur d'onde, la mesure de la phase est effectuée à $2\pi$ près.

Les caractéristiques et avantages de l'invention apparaîtront mieux après la description qui suit, donnée à titre explicatif et nullement limitatif. Cette description se réfère à des dessins annexés, sur lesquels :

– la figure 1 représente schématiquement la disposition des antennes sur un engin porteur du dispositif conforme à l'invention ;

– la figure 2 représente schématiquement un dispositif conforme à l'invention ;

– la figure 3 représente schématiquement une variante de réalisation d'un dispositif conforme à l'invention.

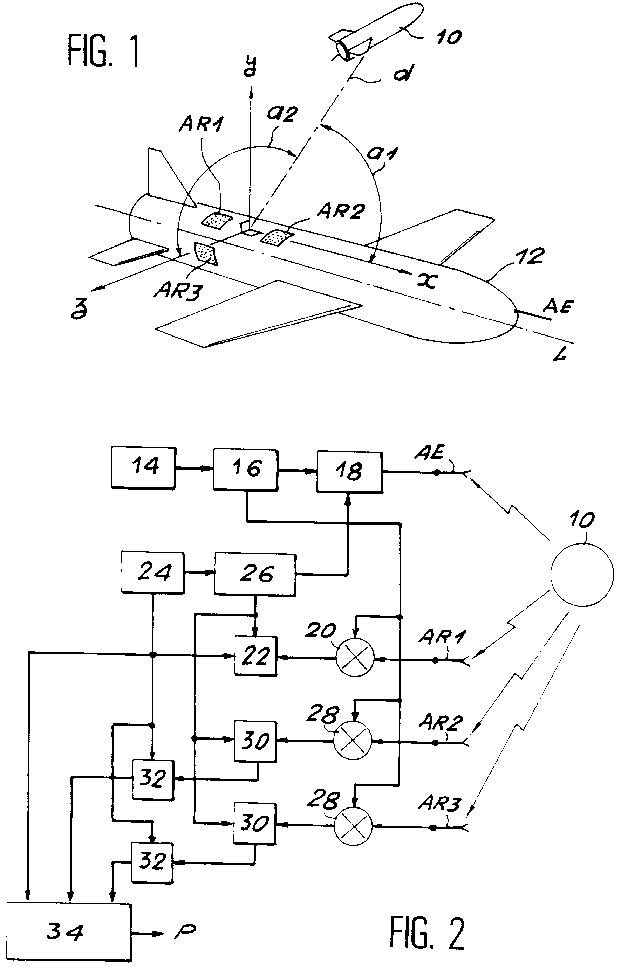

Un dispositif conforme à l'invention détermine la position d'un missile par rapport à un engin cible sur lequel le dispositif est monté. Sur la figure 1, on peut voir les trois paramètres déduits des mesures effectuées par le dispositif et à partir desquels on calcule la position du missile 10 par rapport à un repère de l'espace (x,y,z) attaché à l'engin cible 12 et choisi par exemple orthonormé. Les paramètres sont la distance d missile-engin cible, l'angle a1 entre l'axe missile-engin cible et l'axe x, et l'angle a2 entre l'axe missile-engin cible et l'axe z.

Comme on peut le voir sur la figure 1, le dispositif comprend plusieurs antennes. Une antenne d'émission AE permet l'émission continue d'un signal modulé par une séquence pseudo-aléatoire binaire. Trois antennes de réception AR1, AR2, AR3 permettent la détection d'un écho du signal émis réfléchi par le missile 10.

Pour des raisons qui seront données plus loin, les antennes AR1 et AE sont alignées sur l'axe longitudinal L de l'engin cible 12 ; l'antenne AE est positionnée à la tête de l'engin cible 12 et l'antenne AR1 est située à l'arrière.

Les antennes AR1 et AR2 sont alignées selon l'axe x du repère qui est choisi parallèle à l'axe longitudinal L de l'engin cible 12.

Les antennes AR1 et AR3 sont alignées selon l'axe z du repère et donc perpendiculairement à l'axe x.

Avantageusement, les antennes de réception AR1, AR2, AR3 sont du type plaqué : c'est-à-dire qu'elles sont imprimées sur un support isolant cylindrique qui s'adapte au fuselage de l'engin cible 12.

La figure 2 représente un mode de réalisation du dispositif conforme à l'invention. Ce dernier comprend une première chaîne de réception reliée à une chaîne d'émission reliée à l'antenne d'émission AE. La chaîne d'émission comprend un oscillateur 14 qui délivre en continu un signal possédant par exemple une fréquence de 1,8 GHz, un coupleur 16 et un modulateur biphasé 18. La chaîne d'émission peut comporter d'autres circuits usuels, tel un filtre d'émission, non représentés.

Le dispositif comprend une première chaîne de réception reliée à une première antenne de réception AR1. Cette première chaîne de réception combinée avec la chaîne d'émission réalise un radar de proximétrie du type de celui décrit dans le brevet français 2 286 391 précité. Seule, cette combinaison ne permet que la détection d'une distance et non d'une position.

La première chaîne de réception comprend un transposeur à fréquence nulle 20 relié à un corrélateur 22, un oscillateur commandable en fréquence 24 relié en sortie du corrélateur 22 pour la génération d'un signal à la fréquence d'horloge et un générateur de codes pseudo-aléatoires 26.

Les codes pseudo-aléatoires sont utilisés pour commander le modulateur biphasé 18 de la chaîne d'émission.

La fréquence d'horloge de l'oscillateur commandable en fréquence 24 est asservie à la distance relative entre le missile 10 et l'engin cible équipé du dispositif grâce à la corrélation entre la séquence pseudo-aléatoire portée par l'écho reçu et cette séquence retardée.

La connaissance de la fréquence d'horloge permet de déduire une fonction f(t) définie par d1 + d2 = f(t) où d1 + d2 représente la somme des trajets du signal émis entre l'antenne d'émission, le missile et l'antenne de réception AR1. La mesure de distance est effectuée avec une ambiguïté de position correspondant, à un instant donné, à une surface elliptique dont les deux antennes AE et AR1 sont les foyers.

Les seconde et troisième chaînes de réception sont respectivement reliées aux antennes de réception AR2 et AR3. Ces chaînes de réception sont identiques et comprennent chacune un transposeur à fréquence nulle 28 relié, d'une part, à l'antenne de réception correspondante et, d'autre part, au coupleur 16 de la chaîne d'émission, un corrélateur 30 pour corréler la séquence pseudo-aléatoire issue de la réception avec cette même séquence provenant du générateur 26 mais retardée.

Chaque corrélateur 30 délivre un signal de corrélation sur une sortie reliée à une entrée d'un moyen 32 pour la mesure d'un déphasage entre les signaux de corrélation issus des seconde et troisième chaînes de réception et le signal de corrélation issu de la première chaîne de réception.

Les trois chaînes de réception peuvent aussi comporter d'autres composants usuels (non représentés) tel un filtre de réception par exemple.

Le signal porteur de la fréquence d'horloge, issu du corrélateur 22 appartenant à la première chaîne de réception, et les signaux correspondant aux déphasages mesurés par les moyens 32 des seconde et troisième chaînes de réception sont transmis à l'entrée de moyens 34 pour calculer la position relative missile-engin cible P.

Pour des raisons d'encombrement, les moyens 34 de calcul ne sont pas embarqués mais sont disposés au sol, en communication avec l'engin cible par l'intermédiaire de moyens de transmission hertziens ou autres.

Ces moyens de calcul 34 comportent au moins un fréquencemètre et un calculateur. La fréquence d'horloge correspond à la distance missile-engin cible qui définit dans l'espace un ellipsoïde ayant les antennes AR1 et AE pour foyers.

La mesure du déphasage entre les signaux détectés par les antennes AR1 et AR2 définit dans l'espace un hyperboloïde ayant ces antennes pour foyers.

L'intersection de ces deux figures géométriques définit un cercle dans l'espace puisque les antennes AR1, AR2 et AE sont alignées suivant le même axe qui est le grand axe de l'ellipsoïde.

La mesure du déphasage entre les signaux détectés par les antennes AR1 et AR3 définit dans l'espace un autre hyperboloïde ayant ces antennes pour foyers.

L'intersection entre la seconde hyperboloïde et le cercle se réduit à deux points qui correspondent à deux positions possibles du missile. Cette ambiguïté est levée en limitant la couverture des antennes AR2 et AR3 à une seule demi-sphère de l'espace.

Pour éviter toute ambiguïté sur la mesure des angles a1 et a2, en particulier une mesure modulo $2\pi$, les antennes AR1 et AR2, d'une part, et AR1, AR3 d'autre part, sont espacées au maximum d'une demie longueur d'onde dans le vide du signal continu. Dans l'exemple décrit, où la fréquence est égale à 1,8 GHz, cet espacement est choisi égal à 8 cm.

On obtient donc un point parfaitement localisé dans un demi espace par sa distance, et les angles a1 et a2 précédemment définis (figure 1). De ces paramètres, on déduit facilement l'abscisse, l'ordonnée et la cote du point dans le repère (x, y,z).

Pour obtenir une couverture complète de l'espace, il suffit de doubler le dispositif.

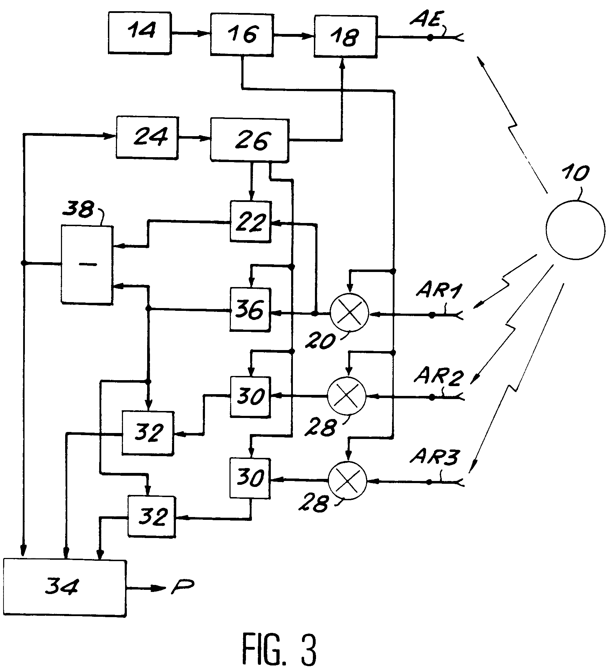

La figure 3 représente schématiquement une variante de réalisation d'un dispositif conforme à l'invention. Une mesure différentielle est effectuée dans la première chaîne de réception entre le signal de corrélation issu du corrélateur 22 et celui issu d'un autre corrélateur 36. Ce dernier effectue une corrélation entre la séquence pseudo-aléatoire provenant de l'écho du signal émis et cette même séquence provenant du générateur 26 mais avec un retard connu et different de celui introduit pour la corrélation par le corrélateur 22. La soustraction est effectuée par un soustracteur 38 qui délivre un signal différentiel pour la commande de l'oscillateur commandé en fréquence 24.

Cette variante permet d'asservir la fréquence par rapport à un zéro de signal plutôt que sur un maximum du signal de corrélation et donne des résultats plus précis.

La détermination des positions relatives missile-engin cible successives permet bien d'établir une trajectographie caractérisant l'évolution du missile à courte distance de l'engin cible.

## Revendications

1. Dispositif radar à émission continue pour la détermination, à courte distance, de la position relative entre un missile (10) et un engin cible (12) sur lequel il est monté, caractérisé en ce qu'il comprend :
   – une chaîne d'émission, reliée à une antenne d'émission (AE) pour l'émission d'un signal continu modulé par une séquence pseudo-aléatoire binaire délivrée à une fréquence d'horloge fH ;
   – une première chaîne de réception, reliée à une première antenne de réception (AR1) et comprenant des premiers moyens pour la corrélation entre un écho du signal émis avec un signal identique mais retardé d'un temps de retard correspondant au trajet du signal émis entre, d'une part, l'antenne d'émission (12) et le missile (10) et, d'autre part, le missile (10) et la première antenne de réception (AR1), ces moyens de corrélation délivrant un premier signal de corrélation sur une entrée d'un générateur commandable en fréquence (24) délivrant un signal à la fréquence d'horloge fH, cette fréquence fH étant représentative de la distance entre le missile et l'engin-cible ;
   – une seconde chaîne de réception, reliée à une seconde antenne de réception (AR2) et assurant la détermination d'un déphasage entre la réception dudit écho par les première et seconde antennes de réception ;
   – une troisième chaîne de réception, reliée à une troisième antenne de réception (AR3) et assurant la détermination d'un déphasage entre la réception dudit écho par les première et troisième antennes de réception ; et
   – des moyens (34) pour calculer, à partir d'une mesure de la fréquence d'horloge fH et des déphasages, la position relative missile-engin cible (P).

2. Dispositif selon la revendication 1, caractérisé en ce que les seconde et troisième chaînes de réception comprennent chacune :
   – des moyens de corrélation (30) entre ledit écho du signal émis avec un signal identique mais retardé dudit temps de retard, ces moyens de corrélation (30) délivrant un signal de corrélation ; et

– des moyens (32) pour la mesure d'un déphasage entre le premier signal de corrélation et le signal de corrélation délivré par les moyens de corrélation (30).

3. Dispositif selon l'une quelconque des revendications 1 et 2, caractérisé en ce que l'antenne d'émission (AE) est alignée avec les première et seconde antennes de réception (AR1, AR2) selon l'axe longitudinal (L) de l'engin cible (12), et les première et troisième antennes de réception (AR1, AR3) étant alignées suivant un axe non parallèle à l'axe longitudinal (L) de l'engin cible.

4. Dispositif selon l'une quelconque des revendications 1 à 3, caractérisé en ce que, d'une part, les première et seconde antennes de réception (AR1, AR2) et d'autre part, les première et troisième antennes de réception (AR1, AR3) sont espacées d'une distance au plus égale à une demie longueur d'onde du signal continu.

FIG. 1

FIG. 2

FIG. 3

**Office européen des brevets**

# RAPPORT DE RECHERCHE EUROPEENNE

Numéro de la demande

EP    91 40 2479

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,X | FR-A-2 561 786 (SNECMA) <br> * le document en entier * <br> --- | 1-4 | G01S13/32 <br> G01S13/87 |
| A | VERKEHR UND TECHNIK <br> vol. 11, Novembre 1978, BIELEFELD DE <br> pages 449 - 456; <br> G.H. SCHILDT ET AL.: 'Möglichkeiten zur Ortung von Landfahrzeugen' <br> * alinéa 2.1; figures 1-2 * <br> --- | 1 | |
| A | DE-A-1 900 854 (LICENTIA PATENT VERWALTUNG) <br> * page 5, ligne 10 - page 6, ligne 2; figures 1-2 * <br><br> ----- | 4 | |

**DOMAINES TECHNIQUES RECHERCHES (Int. Cl.5 )**

G01S

Le présent rapport a été établi pour toutes les revendications

| Lieu de la recherche | Date d'achèvement de la recherche | Examinateur |
|---|---|---|
| LA HAYE | 16 DECEMBRE 1991 | AUGARDE E.P.G.T. |